# FASCICULE DE BREVET EUROPEEN

(11) **EP 3 105 057 B1**
(45) Date de publication et mention de la délivrance du brevet: **21.11.2018**
(21) Numéro de dépôt: 14712700.5
(22) Date de dépôt: 12.02.2014
(51) Int. Cl.: B32B 27/36, E04B 1/80

(54) **PANNEAU ISOLANT SOUS VIDE COMPORTANT UN AÉROGEL ORGANIQUE**
VAKUUMISOLIERUNGSPLATTE MIT EINEM ORGANISCHEN AEROGEL
VACUUM INSULATION PANEL COMPRISING AN ORGANIC AEROGEL

(43) Date de publication de la demande: 21.12.2016
(73) Titulaire: Hutchinson, 75008 Paris (FR)
(72) Inventeur: POUPA PARSIGNEAU, Nadine, F-45680 Dordives (FR); SWOBODA, Benjamin, F-77590 Bois le Roi (FR); HUILLET, Cédric, F-45200 Montargis (FR); DOMINIAK, Christophe, F-45290 Varennes Changy (FR)
(74) Mandataire: Croonenbroek, Thomas Jakob
(86) Numéro de dépôt international: PCT/FR2014/050267
(87) Numéro de publication internationale: WO 2015/121540

(56) Documents cités:
- EP-A1- 1 457 612
- EP-A2- 2 657 278
- WO-A1-2014/060904
- WO-A1-2014/060906
- US-A1- 2012 009 376
- PEKALA R W ET AL: "New organic aerogels based upon a phenolic-furfural reaction", JOURNAL OF NON-CRYSTALLINE SOLIDS, NORTH-HOLLAND PHYSICS PUBLISHING. AMSTERDAM, NL, vol. 188, no. 1-2, 1 juillet 1995 (1995-07-01), pages 34-40, XP004067973, ISSN: 0022-3093, DOI: 10.1016/0022-3093(95)00027-5

## Description

La présente invention concerne le domaine de l'isolation thermique et plus particulièrement les panneaux isolants sous vide à faible conductivité thermique comportant un matériau coeur en aérogel organique.

Dans le domaine de l'isolation thermique il est connu d'utiliser des panneaux isolants sous vide, par exemple dans le domaine du bâtiment pour isoler une maison. Généralement ces panneaux isolants sous vide comportent une enveloppe fermée hermétiquement dans laquelle un vide est crée et dans laquelle un matériau coeur est installé.

Le matériau coeur utilisé au sein des panneaux isolants sous vide est un matériau isolant à faible conductivité thermique comme par exemple de la laine de verre ou alors un matériau isolant microporeux comme un gel de silice. Le vide au sein du panneau isolant sous vide permet de diminuer encore d'autant la conductivité thermique de ce dernier par la raréfaction de l'air au sein des micropores du matériau coeur.

Néanmoins, afin d'atteindre des valeurs de conductivité thermique comprise entre 1 et 20 mW.m⁻¹.K⁻¹, il est nécessaire d'atteindre des pressions extrêmement basses au sein de l'enveloppe. Un tel faible niveau de pression au sein de l'enveloppe conduit à des contraintes importantes sur les enveloppes et celle-ci peuvent, du fait de microfuites, avoir leur pression interne qui remonte et donc avoir une conductivité thermique qui augmente. Cette solution n'est donc pas pérenne dans le temps.

Une solution connue à ce problème technique est l'utilisation comme matériau coeur d'un matériau isolant nanoporeux de type aérogel monolithique comme le montre la demande internationale WO2007001354A2. Un panneau isolant comme présenté dans cette demande internationale peut avoir une valeur de conductivité thermique comprise entre 5 et 10 mW.m⁻¹.K¹ pour une pression au sein de l'enveloppe de l'ordre de 0.4 et 10 mbar.

Cependant les aérogels utilisés dans l'art antérieur sont des aérogels à fort coût de production et difficiles à fabriquer car ils nécessitent une étape de séchage par CO₂ supercritique qui est longue et couteuse.

Un des buts de la présente invention est donc de remédier au moins partiellement aux inconvénients de l'art antérieur et de proposer un panneau isolant sous vide comportant un matériau coeur en aérogel, étant à faible cout de revient et dont la conductivité thermique est comprise entre 1 et 20 mW.m⁻¹.K⁻¹.

La présente invention concerne donc un panneau isolant sous vide comportant :
- une enveloppe, fermée hermétiquement dans laquelle la pression est inférieure à la pression atmosphérique,
- un matériau coeur en aérogel organique placé à l'intérieur de la ladite enveloppe,
ledit aérogel organique étant à base d'une résine issue au moins en partie de polyhydroxybenzène(s) R et de formaldéhyde(s) F,
ledit aérogel organique étant un gel monolithique polymérique organique comprenant au moins un polyélectrolyte cationique hydrosoluble,
ou ledit aérogel organique étant un pyrolysat dudit gel sous forme d'un monolithe de carbone poreux comprenant le produit de la pyrolyse dudit au moins un polyélectrolyte cationique hydrosoluble P,
ledit aérogel organique présentant une conductivité thermique spécifique comprise entre 10 et 40 mW.m⁻¹.K¹ à la pression atmosphérique.

Selon un aspect de l'invention, le au moins un polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

Selon un autre aspect de l'invention, le au moins un polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

Selon un autre aspect de l'invention, l'aérogel organique comprend le produit d'une réaction de polymérisation dans un solvant aqueux W des polyhydroxybenzène(s) R et formaldéhyde(s) F, en présence du au moins un polyélectrolyte cationique hydrosoluble P dissous dans ledit solvant aqueux et d'un catalyseur.

Selon un autre aspect de l'invention, le produit de la réaction de polymérisation comprend ledit au moins un polyélectrolyte cationique hydrosoluble P selon une fraction massique comprise entre 0,2 % et 2 %.

Selon un autre aspect de l'invention, le produit de la réaction de polymérisation comprend ledit au moins un polyélectrolyte cationique hydrosoluble P selon un ratio massique P/(R+F) par rapport auxdits polyhydroxybenzène(s) R et formaldéhyde(s) F, qui est compris entre 2 % et 10 %.

Selon un autre aspect de l'invention, le produit de la réaction de polymérisation comprend ledit au moins un polyélectrolyte cationique hydrosoluble P selon un ratio massique P/(R+F+W) par rapport auxdits polyhydroxybenzène(s) R, formaldéhyde(s) F et solvant aqueux W, qui est compris entre 0,3 % et 2 %.

Selon un autre aspect de l'invention, l'aérogel organique présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

Selon un autre aspect de l'invention, la pression au sein de l'enveloppe est comprise entre 0.1 et 500 mbar.

Selon un autre aspect de l'invention, l'enveloppe est réalisée à partir d'un film d'une épaisseur comprise entre 20 et 500 um.

Selon un autre aspect de l'invention, l'enveloppe comporte au moins une couche en aluminium.

Selon un autre aspect de l'invention, l'enveloppe comporte au moins une couche en polymère.

Selon un autre aspect de l'invention, la au moins une couche en polymère est réalisé dans l'un des polymère suivant : le polyéthylène haute ou basse densité, le silicone, le polyuréthane, l'éthylène-alcool vinylique, le polyéthylène téréphtalate ou le polyamide.

Selon un autre aspect de l'invention, l'enveloppe est réalisée à partir d'un film multicouche comportant au moins une couche en matériau polymère sur sa face intérieure.

Selon un autre aspect de l'invention, le film multicouche formant l'enveloppe comporte les couches suivantes :
- polyéthylène/polyacrylique/aluminium/polyéthylène téréphtalate, ou
- polyéthylène/aluminium/polyéthylène téréphtalate, ou encore
- polyéthylène/aluminium/polyéthylène/aluminium/polyéthylène.

La présente invention concerne également un procédé de fabrication d'un panneau isolant sous vide comportant les étapes suivantes :
- préparation d'un aérogel organique en tant que matériau coeur selon les étapes suivantes :
   a) polymérisation dans un solvant aqueux W de polyhydroxybenzène(s) R et formaldéhyde(s) F, en présence d'au moins un polyélectrolyte cationique hydrosoluble P dissous dans ledit solvant aqueux W et d'un catalyseur,
   b) une gélification de la solution obtenue en a),
   c) un séchage du gel obtenu en b) pour l'obtention dudit gel monolithique polymérique organique,
- placement dudit aérogel organique dans une enveloppe,
- abaissement de la pression au sein de l'enveloppe et fermeture hermétique de ladite enveloppe.

Selon un aspect du procédé de préparation selon l'invention, l'étape de préparation de l'aérogel organique comporte une étape supplémentaire de pyrolyse du gel séché obtenu en c) pour l'obtention d'un carbone poreux.

Selon un autre aspect du procédé de préparation selon l'invention, l'étape a) est réalisée en utilisant ledit au moins un polyélectrolyte cationique hydrosoluble P :
- selon une fraction massique dans la composition comprise entre 0,2 % et 2 %, et/ou
- selon un ratio massique P/(R+F) par rapport auxdits polyhydroxybenzène(s) R et formaldéhyde(s) F, compris entre 2 % et 10 %, et/ou
- selon un ratio massique P/(R+F+W) par rapport auxdits polyhydroxybenzène(s) R, formaldéhyde(s) F et solvant aqueux W, compris entre 0,3 % et 2 %.

Selon un autre aspect du procédé de préparation selon l'invention
- l'étape a) est réalisée à température ambiante, en dissolvant le(s)dit(s) polyhydroxybenzène(s) R et ledit au moins un polyélectrolyte cationique hydrosoluble P dans ledit solvant aqueux W, de préférence constitué d'eau, puis en ajoutant à la dissolution obtenue le(s)dit(s) formaldéhyde(s) F et ledit catalyseur acide ou basique, et que
- l'étape b) est réalisée par cuisson dans un four de ladite solution.

Selon un autre aspect du procédé de préparation selon l'invention, l'étape c) est réalisée par un séchage à l'air, par exemple dans une étuve, pour l'obtention dudit gel monolithique polymérique organique présentant :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

Selon un aspect du procédé de préparation selon l'invention, la fermeture de l'enveloppe est réalisée par thermosoudage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un panneau isolant sous vide,
- la figure 2 montre une représentation schématique en vue de coupe d'un panneau isolant sous vide,
- la figure 3 montre un graphique comparant l'évolution de la conductivité thermique de l'air et d'un aérogel, en fonction de la pression, et
- la figure 4 montre un graphique comparant l'évolution de la conductivité thermique de matériaux coeur de différente porosité, en fonction de la pression.

Les éléments identiques sur les différentes figures, portent les mêmes références.

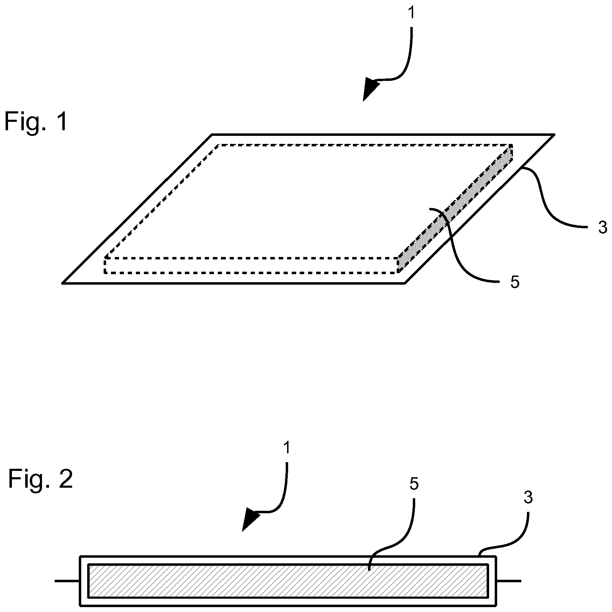

Comme le montre la figure 1, montrant une perspective une représentation schématique d'un panneau isolant 1, ainsi que la figure 2, montrant une représentation schématique en coupe du panneau isolant 1 de la figure 1, celui-ci comporte une enveloppe 3 fermée hermétiquement dans laquelle la pression est inférieure à la pression atmosphérique. Un matériau coeur 5 isolant en matériau aérogel organique est placé à l'intérieur de ladite enveloppe 3.

Ledit aérogel organique peut notamment être un gel monolithique polymérique organique ou un pyrolysat dudit gel sous forme d'un monolithe de carbone poreux super isolant thermique (i.e. de conductivité thermique inférieure ou égale à 40 mW.m⁻¹.K⁻¹).

Le panneau isolant sous vide 1 est généralement conditionné sous forme de plaques de taille et d'épaisseur variable en fonction de l'utilisation à laquelle il va être destiné, par exemple pour une application en isolation thermique dans le domaine offshore où le bâtiment. Cette taille peut par exemple être de 300×300 mm pour une épaisseur de 2 à 30 mm.

Cet aérogel organique est obtenue par le fait que la Demanderesse vient de découvrir d'une manière surprenante que l'ajout en phase aqueuse, à des précurseurs d'une résine de type polyhydroxybenzène et de formaldéhyde, d'une famille d'additifs particulière constituée d'un polyélectrolyte cationique hydrosoluble, permet d'obtenir un gel monolithique ou son pyrolysat qui présente à la fois une haute surface spécifique, une très basse densité et un volume poreux élevé, en pouvant se passer d'un séchage par échange de solvant et par fluide supercritique.

A cet effet, l'aérogel organique est à base d'une résine issue au moins en partie de polyhydroxybenzène(s) R et de formaldéhyde(s) F, est tel qu'il comprend au moins un polyélectrolyte cationique hydrosoluble P.

On notera que cet aérogel incorporant ce polyélectrolyte cationique peut être avantageusement obtenue en utilisant un séchage en étuve bien plus simple à mettre en oeuvre et pénalisant moins le coût de production du gel que le séchage par CO₂ supercritique. En effet, la Demanderesse a découvert que cet additif permet de conserver la forte porosité du gel obtenu suite à ce séchage en étuve et de lui conférer une très faible densité alliée à une surface spécifique et un volume poreux élevés.

Par « gel », on entend de manière connue le mélange d'une matière colloïdale et d'un liquide, qui se forme spontanément ou sous l'action d'un catalyseur par la floculation et la coagulation d'une solution colloïdale.

Par « polymère hydrosoluble », on entend un polymère qui peut être solubilisé dans l'eau sans adjonction d'additifs (de tensioactifs notamment), à la différence d'un polymère hydrodispersable qui est susceptible de former une dispersion lorsqu'il est mélangé à de l'eau.

L'aérogel organique peut également comprendre le produit d'une réaction de polymérisation dans un solvant aqueux W desdits polyhydroxybenzène(s) R et formaldéhyde(s) F, en présence dudit au moins un polyélectrolyte cationique P dissous dans ce solvant et d'un catalyseur acide ou basique.

Avantageusement, ledit produit de la réaction de polymérisation peut comprendre :
- ledit au moins un polyélectrolyte cationique P selon une fraction massique très réduite qui est comprise entre 0,2 % et 2 % et de préférence entre 0,3 % et 1 %, et/ou
- ledit au moins un polyélectrolyte cationique P selon un ratio massique P/(R+F) par rapport auxdits polyhydroxybenzène(s) R et formaldéhyde(s) F, qui est compris entre 2 % et 10 % et de préférence entre 3 % et 7 %, et/ou
- ledit au moins un polyélectrolyte cationique P selon un ratio massique P/(R+F+W) par rapport auxdits polyhydroxybenzène(s) R, formaldéhyde(s) F et solvant aqueux W, qui est compris entre 0,3 % et 2 % et de préférence entre 0,4 % et 1,5 %.

Ledit au moins un polyélectrolyte peut être tout polyélectrolyte cationique totalement soluble dans l'eau et de force ionique faible.

De préférence, il s'agit d'un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

A titre encore plus préférentiel, ledit au moins un polyélectrolyte cationique hydrosoluble est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

Parmi les polymères précurseurs de ladite résine qui sont utilisables dans la présente invention, on peut citer les polymères résultant de la polycondensation d'au moins un monomère du type polyhydroxybenzène et d'au moins un monomère formaldéhyde. Cette réaction de polymérisation peut impliquer plus de deux monomères distincts, les monomères additionnels étant du type polyhydroxybenzène ou non. Les polyhydroxybenzènes utilisables sont préférentiellement des di- ou des tri- hydroxybenzènes, et avantageusement le résorcinol (1,3-di hydroxybenzène) ou le mélange du résorcinol avec un autre composé choisi parmi le catéchol, l'hydroquinone, le phloroglucinol.

On peut par exemple utiliser les polyhydroxybenzène(s) R et formaldéhyde(s) F suivant un rapport molaire R/F compris entre 0.2 et 1.

L'aérogel organique peut avantageusement présenter une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,01 et 0,4.

Avantageusement, l'aérogel organique peut présenter une conductivité thermique comprise entre 10 mW.m⁻¹.K¹ et 40 mW.m⁻¹.K⁻¹ et par exemple comprise entre 12 et 35 mW.m⁻¹.K⁻¹ à la pression atmosphérique.

L'enveloppe 3 est quant à elle réalisée à partir d'un film mono ou multicouches, d'une épaisseur comprise entre 20 et 500um, préférentiellement de l'ordre de 100 µm. Cette faible épaisseur permet de limiter l'augmentation de la conductivité thermique du panneau isolant sous vide 1 par l'ajout de cette enveloppe 3.

Le film comporte de préférence au moins une couche en aluminium ou en polymère par exemple choisi parmi le polyéthylène haute ou basse densité, le silicone, le polyuréthane, l'éthylène-alcool vinylique, le polyéthylène téréphtalate ou le polyamide, qui lui confère une faible perméabilité à l'eau. L'eau était un bon conducteur thermique, si de l'humidité entrait au sein de l'enveloppe 3, cela augmenterait sa conductivité thermique et diminuerait ses performances isolantes. La au moins une couche en aluminium ou polymère confère également une faible perméabilité à l'air de l'enveloppe 3 ce qui permet une meilleure conservation dans le temps des performances isolantes du panneau isolant sous vide 1. En effet, cette perméabilité permet de conserver une faible pression au sein de l'enveloppe 3 et donc une faible conductivité thermique du matériau coeur 5.

Cette couche en aluminium ou polymère doit être la plus fine possible afin d'éviter une augmentation de la conductivité thermique de l'enveloppe 3 car l'aluminium a une conductivité thermique élevée de 237 W.m⁻¹.K⁻¹.

L'enveloppe 3 peut également être réalisée à partir d'un film multicouches comportant au moins une couche en matériau polymère sur sa face intérieure. Cette couche en matériau polymère permet de fermer hermétiquement ladite enveloppe 3 par thermosoudage.

L'enveloppe 3 peut notamment être réalisée à partir d'un film mono ou multicouche replié sur lui-même et dont trois côtés sont fixés, par exemple par thermosoudage, autour du matériau coeur 5 afin de former une enveloppe 3 hermétique.

Le film multicouches formant l'enveloppe 3 peut par exemple comporter les couches suivantes :
- polyéthylène/polyacrylique/aluminium/polyéthylène téréphtalate, ou
- polyéthylène/aluminium/polyéthylène téréphtalate, ou encore
- polyéthylène/aluminium/polyéthylène/aluminium/polyéthy lène.

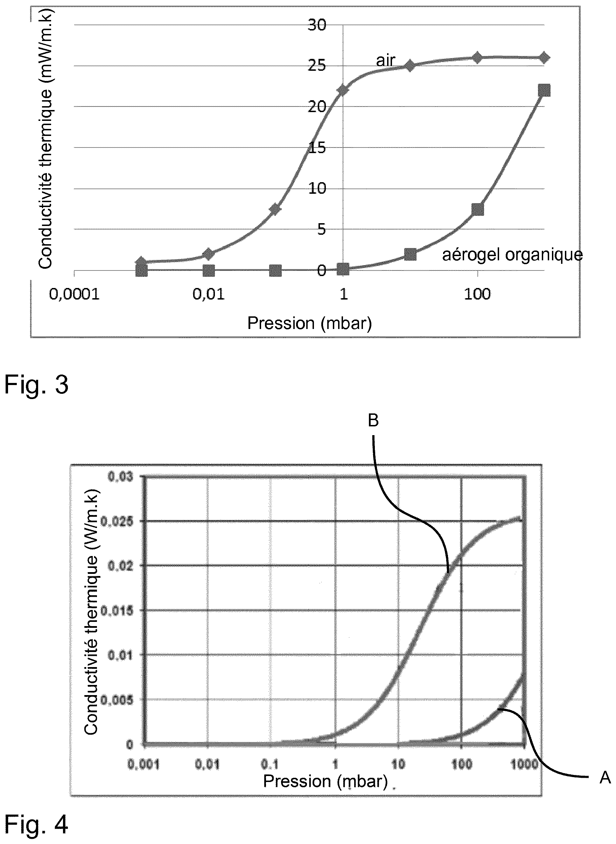

La figure 3 représente un graphique montrant l'évolution de la conductivité thermique de l'air et d'un aérogel organique comme décrit ci-dessus, en fonction de la pression. Il est ainsi possible de voir que plus la pression est faible, plus la conductivité thermique est faible également, et ce que ce soit pour l'air où un aérogel organique. Cependant au vue de cette figure 3, on remarque également que la conductivité thermique de l'aérogel organique diminue plus rapidement en fonction de la diminution de la pression que la conductivité thermique de l'air seul.

Ainsi il est avantageux au sein du panneau isolant 1 sous vide d'avoir un matériau coeur 5 en aérogel organique contenu au sein de l'enveloppe 3 hermétiquement scellée et dans laquelle la pression est comprise entre 0.1 et 10 mbar. A cette pression, la conductivité thermique du panneau isolant 1 est comprise entre 1 et 20 mW.m⁻¹.K⁻¹.

La figure 4 représente quant à elle un graphique montrant l'évolution de la conductivité thermique en fonction de la pression pour des matériaux poreux ayant des diamètres moyens de pores différents. La courbe A, de profil exponentiel, correspond à l'évolution de la conductivité thermique en fonction de la pression d'un matériau avec un diamètre moyen de pore inférieur à 100nm, c'est-à-dire un aérogel organique comme décrit ci-dessus. La courbe B, de profil sigmoïde, correspond quant à elle à l'évolution de la conductivité thermique en fonction de la pression d'un matériau avec un diamètre moyen de pore de 10µm, par exemple un gel de silice microporeux couramment utilisé dans l'art antérieur.

L'on remarque alors que pour une pression comprise entre 0.1 et 500 mbar la conductivité thermique de l'aérogel organique est plus faible que celle du gel de silice microporeux. Pour atteindre une conductivité thermique équivalente avec le gel de silice microporeux, il est nécessaire que la pression soit encore plus faible.

De ce fait, le panneau isolant sous vide 1 avec un matériau coeur 5 en aérogel organique a une durabilité supérieure et il peut conserver ces caractéristiques isolantes dans le temps comparé à un panneau isolant sous vide avec un matériau coeur 5 en gel de silice microporeux. En effet, avec le temps, la pression au sein de l'enveloppe 3 aura tendance à augmenter du faite de la perméabilité même minime des matériaux de l'enveloppe 3 (de l'ordre de 0.3gm/m²/jour) et des microfuites. Ainsi, dans le cas d'un matériau coeur 5 en gel de silice, une augmentation même minime de la pression augmente plus tôt la conductivité thermique du panneau isolant sous vide 1. Dans le cas d'un matériau coeur 5 en aérogel organique, il faut une augmentation plus importante de la pression au sein de l'enveloppe 3 pour que la conductivité thermique augmente significativement.

La présente invention concerne également un procédé de fabrication d'un panneau isolant sous vide 1 comprenant les étapes suivante :

### A) préparation d'un aérogel organique en tant que matériau coeur 5 :

Cette préparation comporte notamment les étapes suivantes :
a) une polymérisation dans un solvant aqueux W de polyhydroxybenzène(s) R et formaldéhyde(s) F, en présence d'au moins un polyélectrolyte cationique P dissous dans ledit solvant aqueux W et d'un catalyseur, pour l'obtention d'une solution à base de ladite résine,
b) une gélification de la solution obtenue en a) pour l'obtention d'un gel de ladite résine,
c) un séchage du gel obtenu en b) pour l'obtention dudit gel monolithique polymérique organique.

L'on obtient alors un aérogel sous forme d'un gel monolithique polymérique organique.

La préparation de l'aérogel organique peut également comporter une étape supplémentaire d) de pyrolyse du gel séché obtenu en c) pour l'obtention d'un carbone poreux.

Avantageusement et comme indiqué ci-dessus, l'on peut mettre en oeuvre l'étape a) en utilisant ledit au moins un polyélectrolyte P selon une fraction massique dans la composition comprise entre 0,2 % et 2 %, et/ou selon un ratio massique P/(R+F) compris entre 2 % et 10 %, et/ou selon un ratio massique P/(R+F+W) compris entre 0,3 % et 2 %.

Egalement avantageusement, l'on peut mettre en oeuvre :
- l'étape a) à température ambiante, en dissolvant le(s)dit(s) polyhydroxybenzène(s) R et ledit au moins un polyélectrolyte cationique P dans ledit solvant aqueux, de préférence constitué d'eau, puis en ajoutant à la dissolution obtenue le(s)dit(s) formaldéhyde(s) F et ledit catalyseur qui peut être acide ou basique, puis
- l'étape b) par cuisson dans un four de ladite solution.

A titre de catalyseur utilisable à l'étape a), on peut par exemple citer des catalyseurs acides tels que des solutions aqueuses d'acide chlorhydrique, sulfurique, nitrique, acétique, phosphorique, trifluoroacétique, trifluorométhanesulfonique, perchlorique, oxalique, toluènesulfonique, dichloroacétique, formique, ou bien des catalyseurs basiques tels que le carbonate de sodium, l'hydrogénocarbonate de sodium, le carbonate de potassium, le carbonate d'ammonium, le carbonate de lithium, l'ammoniaque, l'hydroxyde de potassium et l'hydroxyde de sodium.

On peut par exemple utiliser à l'étape a) un rapport massique R/W entre polyhydroxybenzène(s) et eau compris entre 0,001 et 0,3.

De préférence, on met en oeuvre l'étape c) par un séchage à l'air par exemple dans une étuve, sans échange de solvant ni séchage par fluide supercritique, pour l'obtention dudit gel monolithique polymérique organique qui présente (suivant les conditions de synthèse et notamment le pH) une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,01 et 0,4.

On notera que ce procédé de préparation en phase aqueuse selon l'invention permet ainsi d'obtenir des structures poreuses contrôlées qui varient en fonction des conditions de synthèse. Il est ainsi possible d'obtenir une structure de faible densité uniquement nanoporeuse (i.e. avec un diamètre de pores inférieur à 50 nm), ou bien avec une coexistence entre des nano- et des macropores (i.e. avec un diamètre de pores supérieur à 50 nm).

D'autres caractéristiques, avantages et détails ressortiront à la lecture de la description suivante de plusieurs exemples de réalisation de l'invention, donnés à titre illustratif et non limitatif.

### Exemples de préparation de l'aérogel organique selon l'invention :

Les exemples qui suivent illustrent la préparation de deux gels monolithiques organiques « témoin » G0 et G0', de cinq gels monolithiques organiques selon l'invention G1 à G5 et des carbones poreux correspondants « témoin » C0, C0' et selon l'invention C1 à C5, avec pour réactifs de départ :
- le résorcinol (R) de chez Acros Organics, pur à 98 %,
- le formaldéhyde (F) de chez Acros Organics, pur à 37 %,
- un catalyseur (C) constitué d'acide chlorhydrique pour les gels G1 à G4 et de carbonate de sodium pour le gel G5, et
- le poly(chlorure de diallyldiméthylammonium) (P), pur à 35 % (en solution dans l'eau W), pour les gels G1 à G5.

On a préparé ces gels G0, G0' et G1 à G5 comme suit :
On a dans un premier temps dissous dans un récipient contenant de l'eau le résorcinol R, et le polyélectrolyte P (à l'exception des gels G0 et G0'). Puis après totale dissolution, on a ajouté le formaldéhyde F. On a ajusté au pH approprié la solution polymérique obtenue avec le catalyseur C, étant précisé que l'on a réalisé l'ensemble de ces opérations à température ambiante (à environ 22° C). On a dans un second temps transvasé la solution obtenue dans des moules en Téflon®, que l'on a ensuite placés dans un four à 90° C pendant 24 h pour effectuer la gélification.

On a ensuite procédé au séchage du gel :
- en enceinte humide à 85° C avec un taux d'humidité de 90 % pendant 17 heures, pour obtenir les gels G0', G2, G4 et G5, ou
- par CO₂ supercritique après échange de solvant en bain d'acide trifluoroacétique pendant 3 jours puis en bain d'éthanol absolu pendant 4 jours, pour obtenir les aérogels G0, G1 et G3.

On a enfin pyrolysé sous azote les gels organiques G0, G0' et G1 à G5 à une température de 800° C, pour l'obtention des carbones monolithiques poreux C0, C0' et C1 à C5.

Dans le tableau 1 ci-après :
- R/F est le rapport molaire entre résorcinol et formaldéhyde,
- R/W est le rapport massique entre résorcinol et eau,
- P désigne la fraction massique de polyélectrolyte,
- P/(R+F) est le rapport massique entre le polyélectrolyte et les précurseurs résorcinol-formaldéhyde,
- P/(R+F+W) est le rapport massique entre le polyélectrolyte et les précurseurs résorcinol-formaldéhyde additionnés de l'eau, et
- CO₂ sc désigne un séchage utilisant du CO₂ supercritique, par opposition au séchage en étuve utilisable selon l'invention.

On a mesuré la conductivité thermique des gels G0, G2, G4 (voir tableau 2) et des carbones poreux C0, C2, C4 (voir tableau 3) à 22° C avec un conductivimètre de Neotim selon la technique du fil chaud, et l'on a mesuré les propriétés mécaniques en compression trois points et en traction du gel G4 et du carbone poreux correspondant C4 en comparaison de celles d'un aérogel de silice « témoin » G0" (voir tableau 4) avec un banc de traction/compression MTS selon la norme ASTM C165-07.

On a mesuré (tableau 2) pour chaque carbone poreux C0, C0' et C1 à C5 les surfaces spécifiques, les volumes poreux et les diamètres moyens de pores, au moyen de l'appareil TRISTAR 3020 de Micromeritics.

**Tableau 1 :**

| Quantités de réactifs/procé dé | G0 | G0' | **G1** | **G2** | **G3** | **G4** | **G5** |
|---|---|---|---|---|---|---|---|
| R/F | 0,5 | 0,5 | 0,5 | 0,5 | 0,5 | 0,5 | 0,5 |
| R/W | 0,03 | 0,03 | 0,03 | 0,03 | 0,03 | 0,03 | 0,20 |
| P | 0 | 0 | 0,4 % | 0,4 % | 0,4 % | 0,4 % | - |
| P/(R+F) | 0 | 0 | 0,0626 | 0,062 6 | 0,0640 | 0,064 0 | 0,037 9 |
| P/(R+F+W) | 0 | 0 | 0,0044 | 0,004 4 | 0,0070 | 0,007 0 | 0,012 7 |
| pH | 3 | 3 | 3 | 3 | 1 | 1 | 6,13 |
| Méthode de séchage | CO₂ sc | étuve | CO₂ sc | étuve | CO₂ sc | étuve | étuve |

**Tableau 2 :**

| Gel organique | G0 | G0' | **G1** | **G2** | **G3** | **G4** | **G5** |
|---|---|---|---|---|---|---|---|
| Densité du gel | 0,40 | 1 | 0,20 | 0,40 | 0,04 | 0,04 | 0,20 |
| Conductivité thermique du gel (mW/mK) | 24 | - | - | 26 | - | 24 | - |

**Tableau 3 :**

| Carbone poreux | C0 | C0' | **C1** | **C2** | **C3** | **C4** | **C5** |
|---|---|---|---|---|---|---|---|
| Surface spécifique du carbone (m²/g) | 983 | 18 | 1014 | 1080 | 769 | 1170 | 670 |
| Volume poreux (cm³/g) du carbone | 0,58 | 0,01 2 | 0,87 | 0,95 | 0,32 | 0,47 | 0,26 |
| Diamètre moyen de pores (nm) du carbone | 3,6 | - | 10 | 10 | 5,4 | 4,1 | 3,9 |
| Densité du carbone | 0,40 | 0,90 | 0,20 | 0,40 | 0,04 | 0,06 | 0,20 |
| Conductivité thermique (mW/mK) du carbone | 30 | - | - | 33 | - | 29 | - |

La comparaison des carbones poreux « témoin » C0 et C0' avec ceux de l'invention C1 à C5 montre clairement que l'ajout du polyélectrolyte cationique P permet de maintenir, pour une faible densité obtenue, une structure nanométrique même avec un séchage en étuve (voir les valeurs de surface spécifique, de volume poreux et de diamètre moyen de pores des carbones poreux C2, C4, C5 qui sont du même ordre que celles de C0), alors que sans ce polyélectrolyte l'utilisation d'un séchage par CO₂ supercritique est nécessaire pour conserver cette nanostructure du carbone poreux C0.

Dans ces conditions, les densités des gels G1 à G5 et des carbones C1 à C5 nanostructurés selon l'invention sont toujours inférieures ou égales à 0,4.

En ajustant le pH à 1, ces résultats montrent également qu'il est possible d'obtenir un matériau monolithique (voir les gels G3 et G4 et les carbones C3 et C4 de l'invention) avec des densités beaucoup plus faibles (inférieures ou égales à 0,06).

Enfin, les résultats obtenus pour le gel G5 et le carbone correspondant C5 de l'invention montrent que la synthèse peut également être réalisée en milieu moins acide et même légèrement basique (pH > 6).

**Tableau 4 :**

| Structure du gel ou du carbone | Aérogel de silice* G0" | Gel G4 | Carbone poreux C4 |
|---|---|---|---|
| Densité | 0,1* | 0,04 | 0,06 |
| Module de compression (MPa) | 55* | 800 | 1050 |
| Résistance rupture (MPa) | 4* | 25 | 20 |

| | | | |
|---|---|---|---|
| * selon MA Aegerter, et al. "Aerogel Handbook" Advanced in sol gel derived materials and technologies, chap 22. | | | |

Ce tableau 4 montre que les gels et carbone poreux selon l'invention présentent des propriétés mécaniques très nettement améliorées par rapport à celles d'un aérogel de silice connu.

### B) Formation du panneau isolant sous vide 1.

Cette formation du panneau isolant sous vide 1 est notamment réalisée par le placement de l'aérogel organique dans une enveloppe 3. L'enveloppe 3 peut être formée par un film multicouche replié sur lui-même et dont deux cotés ont été collés entre eux, par exemple par thermosoudage, laissant un coté ouvert par lequel il est possible d'introduire l'aérogel organique.

Ensuite, la pression au sein de l'enveloppe 3 est abaissée, par exemple au moyen d'une pompe à vide, et l'enveloppe 3 est fermée hermétiquement, par exemple par thermosoudure. Cette fermeture par thermosoudure peut résister à des chaleurs de l'ordre de 180C. L'enveloppe 3 peut également être refermée par d'autres moyens connus de l'homme du métier comme par exemple, par brasage dans le cas où des cotés de ladite enveloppe 3 en film métallique sont en contacts, ou par collage, soudure infrarouge ou ultrason ; etc.

Ainsi, on voit bien que le panneau isolant sous vide 1 selon l'invention permet, du fait de l'incorporation en tant que matériau coeur 5 d'un aérogel organique particulier, une meilleure durabilité dans le temps de ces caractéristiques de conductivité thermique et ce pour un coût de productions raisonnable du fait que l'aérogel organique particulier ne nécessite pas d'étape de séchage supercritique.

## Revendications

1. Panneau isolant sous vide (1) comportant :
- une enveloppe (3), fermée hermétiquement dans laquelle la pression est inférieure à la pression atmosphérique,
- un matériau coeur (5) en aérogel organique placé à l'intérieur de la ladite enveloppe (3),
**caractérisé en ce que** ledit aérogel organique est à base d'une résine issue au moins en partie de polyhydroxybenzène(s) R et de formaldéhyde(s) F,
ledit aérogel organique étant un gel monolithique polymérique organique comprenant au moins un polyélectrolyte cationique hydrosoluble,
ou ledit aérogel organique étant un pyrolysat dudit gel sous forme d'un monolithe de carbone poreux comprenant le produit de la pyrolyse dudit au moins un polyélectrolyte cationique hydrosoluble P,
ledit aérogel organique présentant une conductivité thermique spécifique comprise entre 10 et 40 mW.m⁻¹.K⁻¹ à la pression atmosphérique.

2. Panneau isolant sous vide (1) selon la revendication 1, **caractérisée en ce que** ledit au moins un polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

3. Panneau isolant sous vide (1) selon la revendication précédente, **caractérisée en ce que** ledit au moins un polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

4. Panneau isolant sous vide (1) selon l'une des revendications précédentes, **caractérisé en ce que** l'aérogel organique comprend le produit d'une réaction de polymérisation dans un solvant aqueux W des polyhydroxybenzène(s) R et formaldéhyde(s) F, en présence du au moins un polyélectrolyte cationique hydrosoluble P dissous dans ledit solvant aqueux et d'un catalyseur.

5. Panneau isolant sous vide (1) selon la revendication précédente, **caractérisée en ce que** ledit produit de la réaction de polymérisation comprend ledit au moins un polyélectrolyte cationique hydrosoluble P selon une fraction massique comprise entre 0,2 % et 2 %.

6. Panneau isolant sous vide (1) selon l'une des revendications 4 ou 5, **caractérisée en ce que** ledit produit de la réaction de polymérisation comprend ledit au moins un polyélectrolyte cationique hydrosoluble P selon un ratio massique P/(R+F) par rapport auxdits polyhydroxybenzène(s) R et formaldéhyde(s) F, qui est compris entre 2 % et 10 %.

7. Panneau isolant sous vide (1) selon l'une des revendications 4 à 6, **caractérisée en ce que** ledit produit de la réaction de polymérisation comprend ledit au moins un polyélectrolyte cationique hydrosoluble P selon un ratio massique P/(R+F+W) par rapport auxdits polyhydroxybenzène(s) R, formaldéhyde(s) F et solvant aqueux W, qui est compris entre 0,3 % et 2 %.

8. Panneau isolant sous vide (1) selon une des revendications précédentes, **caractérisée en ce que** l'aérogel organique présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

9. Panneau isolant sous vide (1) selon l'une des revendications précédentes, **caractérisé en ce que** la pression au sein de l'enveloppe (3) est comprise entre 0.1 et 500 mbar.

10. Panneau isolant sous vide (1) selon l'une des revendications précédentes, **caractérisé en ce que** l'enveloppe (3) est réalisée à partir d'un film d'une épaisseur comprise entre 20 et 500 um.

11. Panneau isolant sous vide (1) selon l'une des revendications précédentes, **caractérisé en ce que** l'enveloppe (3) comporte au moins une couche en aluminium.

12. Panneau isolant sous vide (1) selon l'une des revendications précédentes, **caractérisé en ce que** l'enveloppe (3) comporte au moins une couche en polymère.

13. Panneau isolant sous vide (1) selon la revendication précédente, **caractérisé en ce que** la au moins une couche en polymère est réalisé dans l'un des polymère suivant : le polyéthylène haute ou basse densité, le silicone, le polyuréthane, l'éthylène-alcool vinylique, le polyéthylène téréphtalate ou le polyamide.

14. Panneau isolant sous vide (1) selon l'une des revendications précédentes, **caractérisé en ce que** l'enveloppe (3) est réalisée à partir d'un film multicouche comportant au moins une couche en matériau polymère sur sa face intérieure.

15. Panneau isolant sous vide (1) selon les revendications 13 et 14, **caractérisé en ce que** le film multicouche formant l'enveloppe (3) comporte les couches suivantes :
- polyéthylène/polyacrylique/aluminium/polyéthylène téréphtalate, ou
- polyéthylène/aluminium/polyéthylène téréphtalate, ou encore
- polyéthylène/aluminium/polyéthylène/aluminium/polyéthy lène.

16. Procédé de fabrication d'un panneau isolant sous vide (1) **caractérisé en ce qu'**il comporte les étapes suivantes :
- préparation d'un aérogel organique en tant que matériau coeur (5) selon les étapes suivantes :
a) polymérisation dans un solvant aqueux W de polyhydroxybenzène(s) R et formaldéhyde(s) F, en présence d'au moins un polyélectrolyte cationique hydrosoluble P dissous dans ledit solvant aqueux W et d'un catalyseur,
b) une gélification de la solution obtenue en a),
c) un séchage du gel obtenu en b) pour l'obtention dudit gel monolithique polymérique organique,
- placement dudit aérogel organique dans une enveloppe (3),
- abaissement de la pression au sein de l'enveloppe (3) et fermeture hermétique de ladite enveloppe (3).

17. Procédé de fabrication selon la revendication précédentes, **caractérisé en ce que** l'étape de préparation de l'aérogel organique comporte une étape supplémentaire de pyrolyse du gel séché obtenu en c) pour l'obtention d'un carbone poreux.

18. Procédé de préparation selon l'une des revendications 16 ou 17, **caractérisé en ce que** l'étape a) est réalisée en utilisant ledit au moins un polyélectrolyte cationique hydrosoluble P :
- selon une fraction massique dans la composition comprise entre 0,2 % et 2 %, et/ou
- selon un ratio massique P/(R+F) par rapport auxdits polyhydroxybenzène(s) R et formaldéhyde(s) F, compris entre 2 % et 10 %, et/ou
- selon un ratio massique P/(R+F+W) par rapport auxdits polyhydroxybenzène(s) R, formaldéhyde(s) F et solvant aqueux W, compris entre 0,3 % et 2 %.

19. Procédé de préparation selon l'une des revendications 16 à 18, **caractérisé en ce que** :
- l'étape a) est réalisée à température ambiante, en dissolvant le(s)dit(s) polyhydroxybenzène(s) R et ledit au moins un polyélectrolyte cationique hydrosoluble P dans ledit solvant aqueux W, de préférence constitué d'eau, puis en ajoutant à la dissolution obtenue le(s)dit(s) formaldéhyde(s) F et ledit catalyseur acide ou basique, et que
- l'étape b) est réalisée par cuisson dans un four de ladite solution.

20. Procédé de préparation selon une des revendications 16 à 19, **caractérisé en ce que** l'étape c) est réalisée par un séchage à l'air, par exemple dans une étuve, pour l'obtention dudit gel monolithique polymérique organique présentant :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

21. Procédé de préparation selon une des revendications 16 à 20, **caractérisé en ce que** la fermeture de l'enveloppe (3) est réalisée par thermosoudage.

## Patentansprüche

1. Vakuumisolierungsplatte (1), umfassend:
- eine hermetisch verschlossene Umhüllung (3), in welcher der Druck niedriger ist als der Atmosphärendruck,
- ein Kernmaterial (5) aus einem organischen Aerogel, das im Inneren der Umhüllung (3) angeordnet ist,
**dadurch gekennzeichnet, dass** das organische Aerogel auf einem Harz basiert, das mindestens teilweise aus Polyhydroxybenzol(en) R und Formaldehyd(en) F erhalten wird,
wobei das organische Aerogel ein organisches polymeres monolithisches Gel ist, das mindestens einen wasserlöslichen kationischen Polyelektrolyten umfasst,
oder das organische Aerogel ein Pyrolysat des Gels in der Form eines porösen Kohlenstoffmonolithen ist, der das Produkt der Pyrolyse des mindestens einen wasserlöslichen kationischen Polyelektrolyten P umfasst,
wobei das organische Aerogel eine spezifische thermische Leitfähigkeit zwischen 10 und 40 mW.m⁻¹.K⁻¹ bei Atmosphärendruck aufweist.

2. Vakuumisolierungsplatte (1) nach Anspruch 1,
**dadurch gekennzeichnet, dass** der mindestens eine wasserlösliche kationische Polyelektrolyt P ein organisches Polymer ist, der aus der Gruppe bestehend aus Salzen von quaternärem Ammonium, Poly(vinylpyridiniumchlorid), Poly(ethylenimin), Poly(vinylpyridin), Poly(allylaminchlorhydrat), Poly(trimethylammoniumethylmethacrylatchlorid), Poly(dimethylammoniumacrylamidcochlorid) und ihren Mischungen ausgewählt ist.

3. Vakuumisolierungsplatte (1) nach dem vorhergehenden Anspruch,
**dadurch gekennzeichnet, dass** der mindestens eine wasserlösliche kationische Polyelektrolyt P ein Salz ist, der Einheiten umfasst, die von einem quaternären Ammonium stammen, das aus Poly(diallyldimethylammoniumhalogenid), und vorzugsweise Poly(diallyldimethylammoniumchlorid) oder Poly(diallyldimethylammoniumbromid), ausgewählt ist.

4. Vakuumisolierungsplatte (1) nach einem der vorhergehenden Ansprüche,
**dadurch gekennzeichnet, dass** das organische Aerogel das Produkt einer Polymerisationsreaktion in einem wässrigen Lösungsmittel W von Polyhydroxybenzol(en) R und Formaldehyd(en) F, in Anwesenheit mindestens eines wasserlöslichen kationischen Polyelektrolyten P, gelöst in dem wässerigen Lösungsmittel, und eines Katalysators, umfasst.

5. Vakuumisolierungsplatte (1) nach dem vorhergehenden Anspruch,
**dadurch gekennzeichnet, dass** das Produkt der Polymerisationsreaktion den mindestens einen wasserlöslichen kationischen Polyelektrolyten P in einer Massenfraktion zwischen 0,2 % und 2 % umfasst.

6. Vakuumisolierungsplatte (1) nach einem der Ansprüche 4 oder 5,
**dadurch gekennzeichnet, dass** das Produkt der Polymerisationsreaktion den mindestens einen wasserlöslichen kationischen Polyelektrolyten P in einem Massenverhältnis P/(R+F) in Bezug auf Polyhydroxybenzol(e) R und Formaldehyd(e) F umfasst, das zwischen 2 % und 10 % liegt.

7. Vakuumisolierungsplatte (1) nach einem der Ansprüche 4 bis 6,
**dadurch gekennzeichnet, dass** das Produkt der Polymerisationsreaktion den mindestens einen wasserlöslichen kationischen Polyelektrolyten P in einem Massenverhältnis P/(R+F+W) in Bezug auf Polyhydroxybenzol(e) R, Formaldehyd(e) F und wässriges Lösungsmittel W umfasst, das zwischen 0,3 % und 2 % liegt.

8. Vakuumisolierungsplatte (1) nach einem der vorhergehenden Ansprüche,
**dadurch gekennzeichnet, dass** das organische Aerogel aufweist:
- eine spezifische Oberfläche zwischen 400 m²/g und 1200 m²/g, und/oder
- ein poröses Volumen zwischen 0,1 cm³/g und 3 cm³/g, und/oder
- einen mittleren Porendurchmesser zwischen 3 nm und 30 nm, und/oder
- eine Dichte zwischen 0,01 und 0,4.

9. Vakuumisolierungsplatte (1) nach einem der vorhergehenden Ansprüche,
**dadurch gekennzeichnet, dass** der Druck im Inneren der Umhüllung (3) zwischen 0,1 und 500 mbar liegt.

10. Vakuumisolierungsplatte (1) nach einem der vorhergehenden Ansprüche,
**dadurch gekennzeichnet, dass** die Umhüllung (3) aus einem Film mit einer Dicke zwischen 20 und 500 µm hergestellt ist.

11. Vakuumisolierungsplatte (1) nach einem der vorhergehenden Ansprüche,
**dadurch gekennzeichnet, dass** die Umhüllung (3) mindestens eine Schicht aus Aluminium umfasst.

12. Vakuumisolierungsplatte (1) nach einem der vorhergehenden Ansprüche,
**dadurch gekennzeichnet, dass** die Umhüllung (3) mindestens eine Schicht aus Polymer umfasst.

13. Vakuumisolierungsplatte (1) nach dem vorhergehenden Anspruch,
**dadurch gekennzeichnet, dass** die mindestens eine Schicht aus Polymer aus mindestens einem der folgenden Polymere hergestellt ist: Polyethylen mit hoher oder niedriger Dichte, Silikon, Polyurethan, Ethylenvinylalkohol, Polyethylenterephthalat oder Polyamid.

14. Vakuumisolierungsplatte (1) nach einem der vorhergehenden Ansprüche,
**dadurch gekennzeichnet, dass** die Umhüllung (3) aus einem mehrschichtigen Film hergestellt ist, der mindestens eine Schicht aus Polymermaterial auf seinen Innenfläche umfasst.

15. Vakuumisolierungsplatte (1) nach den Ansprüchen 13 und 14,
**dadurch gekennzeichnet, dass** der mehrschichtige Film, der die Umhüllung (3) bildet, die folgenden Schichten umfasst:
- Polyethylen/Polyacryl/Aluminium/Polyethylenterep hthalat, oder
- Polyethylen/Aluminium/Polyethylenterephthalat, oder auch
- Polyethylen/Aluminium/Polyethylen/Aluminium/ Polyethylen.

16. Verfahren zur Herstellung einer Vakuumisolierungsplatte (1), **dadurch gekennzeichnet, dass** dieses die folgenden Schritte umfasst:
- Vorbereitung eines organischen Aerogels als Kernmaterial (5) gemäß den folgenden Schritten:
a) Polymerisation von Polyhydroxybenzol(en) R und Formaldehyd(en) F in einem wässrigen Lösungsmittel W, in Anwesenheit mindestens eines wasserlöslichen kationischen Polyelektrolyten P, gelöst in dem wässrigen Lösungsmittel W, und eines Katalysators,
b) Gelierung der in a) erhaltenen Lösung,
c) Trocknung des in b) erhaltenen Gels, um das organische polymere monolithische Gel zu erhalten,
- Platzierung des organischen Aerogels in eine Umhüllung (3),
- Senkung des Drucks im Inneren der Umhüllung (3) und hermetischer Verschluss der Umhüllung (3).

17. Herstellungsverfahren nach dem vorhergehenden Anspruch,
**dadurch gekennzeichnet, dass** der Schritt der Herstellung des organischen Aerogels einen ergänzenden Schritt der Pyrolyse des getrockneten Gels umfasst, das in Schritt c) erhalten wird, um porösen Kohlenstoff zu erhalten.

18. Vorbereitungsverfahren nach einem der Ansprüche 16 oder 17,
**dadurch gekennzeichnet, dass** der Schritt a) unter Verwendung des mindestens einen wasserlöslichen kationischen Polyelektrolyten P durchgeführt wird:
- in einer Massenfraktion in der Zusammensetzung zwischen 0,2 % und 2,0 %, und/oder
- in einem Massenverhältnis P/(R+F) in Bezug auf Polyhydroxybenzol(e) R und Formaldehyd(e) F zwischen 2 % und 10 %, und/oder
- in einem Massenverhältnis P/(R+F+W) in Bezug auf Polyhydroxybenzol(e) R, Formaldehyd(e) F und wässeriges Lösungsmittel W zwischen 0,3 % und 2 %.

19. Vorbereitungsverfahren nach einem der Ansprüche 16 bis 18,
**dadurch gekennzeichnet, dass**:
- der Schritt a) bei Umgebungstemperatur durchgeführt wird, durch Lösen von Polyhydroxybenzol(en) R und des mindestens einen wasserlöslichen kationischen Polyelektrolyten P in dem wässrigen Lösungsmittel W, das vorzugsweise aus Wasser besteht, dann durch Zusatz von Formaldehyd(en) F und des sauren oder basischen Katalysators zur erhaltenen Lösung,
und dadurch, dass:
- der Schritt b) durch Kochen der Lösung in einem Ofen durchgeführt wird.

20. Vorbereitungsverfahren nach einem der Ansprüche 16 bis 19,
**dadurch gekennzeichnet, dass** der Schritt c) durch eine Lufttrocknung, beispielsweise in einem Trockenofen, durchgeführt wird, um das organische polymere monolithische Gel zu erhalten, das aufweist:
- eine spezifische Oberfläche zwischen 400 m²/g und 1200 m²/g, und/oder
- ein poröses Volumen zwischen 0,1 cm³/g und 3 cm³/g, und/oder
- einen mittleren Porendurchmesser zwischen 3 nm und 30 nm, und/oder
- eine Dichte zwischen 0,01 und 0,4.

21. Vorbereitungsverfahren nach einem der Ansprüche 16 bis 20,
**dadurch gekennzeichnet, dass** der Verschluss der Umhüllung (3) durch Heißversiegelung durchgeführt wird.

## Claims

1. Vacuum insulation board (1) comprising:
- a hermetically closed covering (3) in which the pressure is lower than atmospheric pressure,
- a core material (5) made of organic aerogel placed inside said covering (3),
**characterized in that** said organic aerogel is based on a resin resulting at least in part from polyhydroxybenzene(s) R and formaldehyde(s) F,
said organic aerogel being a polymeric monolithic organic gel comprising at least one water-soluble cationic polyelectrolyte,
or said organic aerogel being a pyrolysate of said gel in the form of a porous carbon monolith comprising the product of the pyrolysis of said at least one water-soluble cationic polyelectrolyte P,
said organic aerogel exhibiting a specific thermal conductivity of between 10 and 40 mW.m⁻¹.K⁻¹ at atmospheric pressure.

2. Vacuum insulation board (1) according to Claim 1, **characterized in that** said at least one water-soluble cationic polyelectrolyte P is an organic polymer chosen from the group consisting of quaternary ammonium salts, poly(vinylpyridinium chloride), polyethyleneimine, polyvinylpyridine, poly(allylamine hydrochloride), poly(trimethylammonioethyl methacrylate chloride), poly(acrylamide-co-dimethylammonium chloride) and their mixtures.

3. Vacuum insulation board (1) according to the preceding claim, **characterized in that** said at least one water-soluble cationic polyelectrolyte P is a salt comprising units resulting from a quaternary ammonium chosen from poly(diallyldimethylammonium halide) and is preferably poly(diallyldimethylammonium chloride) or poly(diallyldimethylammonium bromide).

4. Vacuum insulation board (1) according to one of the preceding claims, **characterized in that** the organic aerogel comprises the product of a polymerization reaction in an aqueous solvent W of the polyhydroxybenzene(s) R and formaldehyde(s) F, in the presence of the at least one water-soluble cationic polyelectrolyte P dissolved in said aqueous solvent and of a catalyst.

5. Vacuum insulation board (1) according to the preceding claim, **characterized in that** said product of the polymerization reaction comprises said at least one water-soluble cationic polyelectrolyte P according to a mass fraction of between 0.2% and 2%.

6. Vacuum insulation board (1) according to either of Claims 4 and 5, **characterized in that** said product of the polymerization reaction comprises said at least one water-soluble cationic polyelectrolyte P according to a P/(R+F) ratio by weight, with respect to said polyhydroxybenzene(s) R and formaldehyde(s) F, which is between 2% and 10%.

7. Vacuum insulation board (1) according to one of Claims 4 to 6, **characterized in that** said product of the polymerization reaction comprises said at least one water-soluble cationic polyelectrolyte P according to a P/(R+F+W) ratio by weight, with respect to said polyhydroxybenzene(s) R, formaldehyde(s) F and aqueous solvent W, which is between 0.3% and 2%.

8. Vacuum insulation board (1) according to one of the preceding claims, **characterized in that** the organic aerogel exhibits:
- a specific surface of between 400 m²/g and 1200 m²/g, and/or
- a pore volume of between 0.1 cm³/g and 3 cm³/g, and/or
- a mean pore diameter of between 3 nm and 30 nm, and/or
- a density of between 0.01 and 0.4.

9. Vacuum insulation board (1) according to one of the preceding claims, **characterized in that** the pressure within the covering (3) is between 0.1 and 500 mbar.

10. Vacuum insulation board (1) according to one of the preceding claims, **characterized in that** the covering (3) is produced from a film with a thickness of between 20 and 500 µm.

11. Vacuum insulation board (1) according to one of the preceding claims, **characterized in that** the covering (3) comprises at least one layer made of aluminum.

12. Vacuum insulation board (1) according to one of the preceding claims, **characterized in that** the covering (3) comprises at least one layer made of polymer.

13. Vacuum insulation board (1) according to the preceding claim, **characterized in that** the at least one layer made of polymer is produced from one of the following polymers: high- or low-density polyethylene, silicone, polyurethane, ethylene/vinyl alcohol, polyethylene terephthalate or polyamide.

14. Vacuum insulation board (1) according to one of the preceding claims, **characterized in that** the covering (3) is produced from a multilayer film comprising at least one layer made of polymer material on its internal face.

15. Vacuum insulation board (1) according to Claims 13 and 14, **characterized in that** the multilayer film forming the covering (3) comprises the following layers:
- polyethylene/polyacrylic/aluminum/polyethylene terephthalate, or
- polyethylene/aluminum/polyethylene terephthalate, or also
- polyethylene/aluminum/polyethylene/aluminum/polyethylene.

16. Process for the manufacture of a vacuum insulation board (1), **characterized in that** it comprises the following stages:
- preparation of an organic aerogel as core material (5) according to the following stages:
a) polymerization in an aqueous solvent W of polyhydroxybenzene(s) R and formaldehyde(s) F, in the presence of at least one water-soluble cationic polyelectrolyte P dissolved in said aqueous solvent W and of a catalyst,
b) gelling of the solution obtained in a),
c) drying of the gel obtained in b) in order to obtain said polymeric monolithic organic gel,
- placing said organic aerogel in a covering (3),
- lowering the pressure within the covering (3) and hermetically closing said covering (3).

17. Manufacturing process according to the preceding claim, **characterized in that** the stage of preparation of the organic aerogel comprises an additional stage of pyrolysis of the dried gel obtained in c), in order to obtain a porous carbon.

18. Preparation process according to either of Claims 16 and 17, **characterized in that** stage a) is carried out by using said at least one water-soluble cationic polyelectrolyte P:
- according to a mass fraction in the composition of between 0.2% and 2%, and/or
- according to a P/(R+F) ratio by weight, with respect to said polyhydroxybenzene(s) R and formaldehyde(s) F, of between 2% and 10%, and/or
- according to a P/(R+F+W) ratio by weight, with respect to said polyhydroxybenzene(s) R, formaldehyde(s) F and aqueous solvent W, of between 0.3% and 2%.

19. Preparation process according to one of Claims 16 to 18, **characterized in that**:
- stage a) is carried out at ambient temperature, by dissolving said polyhydroxybenzene(s) R and said at least one water-soluble cationic polyelectrolyte P in said aqueous solvent W, preferably composed of water, and by then adding, to the solution obtained, said formaldehyde(s) F and said acidic or basic catalyst, and
- stage b) is carried out by curing said solution in an oven.

20. Preparation process according to one of Claims 16 to 19, **characterized in that** stage c) is carried out by drying with air, for example in a stove, in order to obtain said polymeric monolithic organic gel exhibiting:
- a specific surface of between 400 m²/g and 1200 m²/g, and/or
- a pore volume of between 0.1 cm³/g and 3 cm³/g, and/or
- a mean pore diameter of between 3 nm and 30 nm, and/or
- a density of between 0.01 and 0.4.

21. Preparation process according to one of Claims 16 to 20, **characterized in that** the closing of the covering (3) is carried out by heat sealing.
